# EUROPEAN PATENT APPLICATION

(11) **EP 4 736 961 A2**
(43) Date of publication of application: **06.05.2026**
(21) Application number: 25218472.6
(22) Date of filing: 25.11.2025
(51) Int. Cl.: A63B 21/00, A63B 23/035, F16C 11/10, A63B 21/02, A63B 21/04, A63B 22/00

(54) **FOOT-OPERATED HANDRAIL ADJUSTING MECHANISM AND PILATES REFORMER USING SAME**

(30) Priority: 28.08.2025 CN 202511219358; 28.08.2025 CN 202521847111 U
(71) Applicant: Dezhou Deren Fitness Equipment Co., Ltd., Dezhou City, Shandong Province 250000 (CN)
(72) Inventor: LI, Zhonglu, Dezhou City, Shandong Province, 250000 (CN)
(74) Representative: JD&P Patent Attorneys Joanna Dargiewicz & Partners

(57) **Abstract**

The present disclosure provides a foot-operated handrail adjusting mechanism and a Pilates reformer using the same. The foot-operated handrail adjusting mechanism includes a handrail body, adjusting wheels, wheel mounting seats and a pedal assembly. The handrail body has a U-shaped structure as a whole. Two ends of the handrail body are each provided with an adjusting wheel, and the adjusting wheel is mounted to the Pilates reformer through a wheel mounting seat, so that the handrail body is capable of driving the adjusting wheel to rotate relative to the wheel mounting seat. The adjusting wheel is provided with a plurality of positioning slots. The pedal assembly is hinged between the two wheel mounting seats, and pressing a pedal body of the pedal assembly enables two positioning pin bodies of the pedal assembly to be locked with the positioning slots of the two adjusting wheels. Through linkage design between the pedal assembly and the positioning slots of the adjusting wheels, locking and release of a handrail can be operated with feet, making angle adjustment of the handrail more efficient and safer. Moreover, methods of adjusting and fixing components such as a headrest and hand and foot straps are optimized, thereby improving the overall performance of the Pilates reformer.

## Description

### TECHNICAL FIELD

The present disclosure relates to the field of fitness equipment, and in particular to a foot-operated handrail adjusting mechanism and a Pilates reformer using the same.

### BACKGROUND

A Pilates reformer is a professional apparatus widely used in rehabilitation training, physical enhancement and body sculpting, and its functionality and precision of ergonomics directly impact training effectiveness and user experience. Among numerous components of a Pilates reformer, the handrail is a critical component for users to push, pull, support and change positions, and its flexible adjustment capabilities for angle and height are very important. Handrails of conventional reformers are typically fixed by manual knobs or pins. On one hand, to adjust the handrail, the user has to bend over or operate with bare hand, which is cumbersome and inefficient. Moreover, interrupting movements to make adjustments during training disrupts the exercise rhythm and affects the consistency of training. In addition, existing adjusting mechanisms lack precision and stability in multi-angle locking, leading to unreliable locking, loosening, or limited adjustment ranges.

On the other hand, the Pilates reformer typically integrates function modules such as a headrest, shoulder rests, hand and foot straps and a sliding platform. Further optimization is required for the coordination and operability of these functional modules as a whole. For example, height adjustment of the headrest mostly relies on a simple insertion structure, which lacks the capability of rapid fine adjustment. Storage and tension control of the hand and foot straps are implemented at different locations, making operation inconvenient.

### SUMMARY OF PRESENT INVENTION

In view of this, the present disclosure aims to provide a foot-operated handrail adjusting mechanism and a Pilates reformer using the same. Through linkage design between the pedal assembly and the positioning slots of the adjusting wheels, locking and release of a handrail can be operated with feet, making angle adjustment of the handrail more efficient and safer. Moreover, methods of adjusting and fixing components such as a headrest and hand and foot straps are optimized, thereby improving the overall performance of the Pilates reformer.

To achieve the above objective, the present disclosure adopts the following technical solution.

A foot-operated handrail adjusting mechanism includes a handrail body, adjusting wheels, wheel mounting seats and a pedal assembly; the handrail body has a U-shaped structure as a whole; two ends of the handrail body are each provided with one adjusting wheel, and the adjusting wheels each is mounted to a Pilates reformer through one wheel mounting seat, so that the handrail body is capable of driving the adjusting wheels to rotate relative to the wheel mounting seats; the adjusting wheel is provided with a plurality of positioning slots; the pedal assembly is hinged between the two wheel mounting seats, and the pedal assembly comprises a pedal body configured to be pedaled to enable two positioning pin bodies of the pedal assembly to be locked with the positioning slots of the two adjusting wheels, thereby locking the handrail body.

Further, a middle of the adjusting wheel is provided with a square hole for connecting to the handrail body.

A side of the adjusting wheel away from the handrail body is provided with the plurality of positioning slots, and the positioning slots are provided in an upper part of the adjusting wheel, where the positioning slots are provided within a range of 0°-180°.

Further, the wheel mounting seat includes a first mounting shell and a second mounting shell. The first mounting shell and the second mounting shell are connected through bolts to mount the adjusting wheel.

An inner side of the second mounting shell is provided with a rotating shaft. An end portion of the handrail body is provided with a rotating hole. The end portion of the handrail body passes through the square hole of the adjusting wheel, and the rotating shaft is inserted into the rotating hole.

An outer side of the second mounting shell is provided with a through hole, a hinge seat and a spring mounting seat from top to bottom. The through hole is configured for the positioning pin body to pass through.

The hinge seat is configured to mount the pedal assembly. The spring mounting seat is configured to mount a spring body.

Further, the second mounting shell is further provided with a limit rod, and a guide slideway is formed between the limit rod and the second mounting shell.

Further, the pedal assembly includes the pedal body, a first hinge arm, a second hinge arm, a first positioning pin and a second positioning pin. The first hinge arm and the second hinge arm are structurally identical and symmetrically arranged, and the first positioning pin and the second positioning pin are structurally identical and symmetrically arranged.

A first end of the pedal body is hinged with the hinge seat of one of the wheel mounting seats through the first hinge arm. An end portion of the first hinge arm is provided with the first positioning pin.

A second end of the pedal body is hinged with the hinge seat of the other wheel mounting seat through the second hinge arm. An end portion of the second hinge arm is provided with the second positioning pin.

Further, the first hinge arm is boomerang-shaped and is provided with a first oblong hole and a second oblong hole.

The pedal body is connected to the first oblong hole through a bolt, and the first positioning pin is connected to the second oblong hole through a bolt. A middle of the first hinge arm is hinged with the hinge seat through a bolt.

A side of the first hinge arm close to the first oblong hole is provided with a boss, and the boss is configured to be fitted with the spring body.

Two sides of the pedal body are each further provided with a limit roller. The two limit rollers are respectively fitted with the two limit rods, and the pedal body is fitted with the guide slideway such that the pedal body is guided to move along a straight line.

Further, the spring mounting seat is cylindrical in shape. The spring body is mounted in the spring mounting seat. Two side walls of the spring mounting seat are each provided with a groove. The two grooves form sliding slots for limiting movement of the first hinge arm.

The first positioning pin includes the positioning pin body and a connecting piece. The positioning pin body is mounted to the connecting piece. The connecting piece has a U-shaped structure and is hinged with the second oblong hole through a bolt.

A Pilates reformer further includes a frame, a carriage, a headrest body, shoulder rest bodies, hand and foot straps, winding rollers, a first cushion and a second cushion.

The foot-operated handrail adjusting mechanism is mounted on an end side of the frame.

A bottom surface of the carriage is provided with a sliding plate. The sliding plate is provided with a plurality of sliding rollers that form a sliding fit with the frame. The sliding plate is connected to the frame through a plurality of tension springs.

A bottom surface of the sliding plate is provided with the winding rollers. An end of an upper surface of the carriage away from the foot-operated handrail adjusting mechanism is provided with the headrest body and the shoulder rest bodies. One end of the hand and foot strap is connected to the winding roller, and the other end passes over a support rod arranged on the frame and is connected to a storage rod of a shoulder rest.

The first cushion and the second cushion are respectively arranged at two ends of the frame.

Further, a lower surface of the carriage is provided with a headrest adjusting assembly including a headrest support plate, a headrest fixing pin and a headrest adjusting rod.

The carriage is provided with a recess. The headrest support plate is mounted to the recess on the lower surface of the carriage, and the headrest body is mounted to the recess through a hinge.

A lower surface of the headrest body is hinged with the headrest adjusting rod. The headrest support plate is provided with a through hole for the headrest adjusting rod to pass through. A side of the through hole of the headrest support plate is provided with the headrest fixing pin.

The headrest adjusting rod is provided with a plurality of adjusting holes, and inserting the headrest fixing pin into the adjusting holes allows for height adjustment of the headrest body.

Further, the headrest support plate is further provided with two pressing assemblies for fixing the hand and foot straps.

The two pressing assemblies each include a pressing seat and a pressing wheel. The pressing seat is mounted to the headrest support plate for the hand and foot strap to pass through. The pressing wheel is rotatably connected to the pressing seat. The pressing wheel is a cam structure. A circumferential surface of the pressing wheel is provided with tooth grooves. The pressing wheel is provided with a lever, and turning the lever enables the hand and foot strap to be fixed between the tooth groove and the pressing seat, thereby fixing the hand and foot strap.

Compared with the prior art, the foot-operated handrail adjusting mechanism and the Pilates reformer using the same in the present disclosure have the following advantages:
(1) According to the foot-operated handrail adjusting mechanism and the Pilates reformer using the same in the present disclosure, with innovative foot-operated design, the user can quickly lock and unlock the handrail solely by foot operation without changing the posture of hands or interrupting the training process. This ensures the consistency of exercise, making the Pilates reformer particularly suitable for high-intensity or rehabilitation training requiring frequent angle adjustments and thus significantly improving the training efficiency. In contrast, to adjust a conventional handrail, the user has to interrupt training and operate with hands while bending over, which is time and labor consuming and disrupts the exercise rhythm.
(2) According to the foot-operated handrail adjusting mechanism and the Pilates reformer using the same in the present disclosure, by adjusting the plurality of positioning slots provided in the upper part of the circumference of the adjusting wheel to be fitted with the positioning pin driven by the pedal assembly, the handrail can be precisely fixed at multiple preset angles. This mechanical interlock provides substantial locking force, avoiding the risk of accidental loosening during use and ensuring the stability of the handrail at any angle, thereby providing a safe and reliable support for training. Moreover, the positioning slots designed in the upper part of the adjusting wheel are more ergonomic, and cover the most frequently used adjustment range.
(3) According to the foot-operated handrail adjusting mechanism and the Pilates reformer using the same in the present disclosure, with the fit between the hinge arm and the spring body, only a small force is needed to press the pedal to unlock the handrail. Upon release, the spring automatically assists the positioning pin to return and engage with the positioning slot, so that the user can feel effortless and get a clear feedback for operation. The fit between the limit rollers and guide slideways ensures the pedal assembly to move along a straight line, thereby preventing unsmooth movement and uneven wear and making the pedal assembly move smoothly and precisely.
(4) According to the foot-operated handrail adjusting mechanism and the Pilates reformer using the same in the present disclosure, the winding rollers of the hand and foot straps are directly arranged on the sliding plate at the bottom of the carriage, thereby concentrating the center of gravity and facilitating storage. Through the fit between the adjusting rod and the fixing pin, the height of the headrest can be adjusted in a stepless or stepped manner rapidly and stably. With the cam-structured pressing wheel with the tooth grooves, the pressing assembly provides a great fixing force for the hand and foot strap. These designs collectively provide the user with an efficient fitness solution, thereby significantly improving the value and user satisfaction of the Pilates reformer.

### BRIEF DESCRIPTION OF THE DRAWINGS

The accompanying drawings which constitute a part of the description of the present disclosure are intended to provide further understanding of the present disclosure. The exemplary embodiments of the present disclosure and descriptions thereof are intended to be illustrative of the present disclosure and do not constitute an undue limitation of the present disclosure. In the accompanying drawings:
FIG. 1 is a first schematic view of a foot-operated handrail adjusting mechanism according to an embodiment of the present disclosure;
FIG. 2 is a second schematic view of the foot-operated handrail adjusting mechanism according to an embodiment of the present disclosure;
FIG. 3 is a schematic partial enlarged view of A in FIG. 2 according to an embodiment of the present disclosure;
FIG. 4 is a schematic view of an adjusting wheel according to an embodiment of the present disclosure;
FIG. 5 is a schematic exploded view of a wheel mounting seat according to an embodiment of the present disclosure;
FIG. 6 is a schematic front view of a Pilates reformer according to an embodiment of the present disclosure;
FIG. 7 is a schematic back view of the Pilates reformer according to an embodiment of the present disclosure;
FIG. 8 is a schematic enlarged view of a headrest adjusting assembly according to an embodiment of the present disclosure; and
FIG. 9 is a schematic enlarged view of a pressing assembly according to an embodiment of the present disclosure.

### Reference numerals:

1. handrail body; 2. adjusting wheel; 21. positioning slot; 3. wheel mounting seat; 31. first mounting shell; 32. second mounting shell; 33. hinge seat; 34. spring mounting seat; 341. spring body; 35. limit rod; 4. pedal assembly; 41. pedal body; 411. limit roller; 42. first hinge arm; 421. first oblong hole; 422. second oblong hole; 43. second hinge arm; 44. first positioning pin; 45. second positioning pin; 5. frame; 6. carriage; 7. headrest body; 8. shoulder rest body; 9. hand and foot strap; 10. winding roller; 11. first cushion; 12. second cushion; 13. headrest adjusting assembly; 131. headrest support plate; 132. headrest fixing pin; 133. headrest adjusting rod; 14. pressing assembly; 141. pressing seat; 142. pressing wheel; 15. tension spring; 16. sliding plate.

### DETAILED DESCRIPTION OF THE EMBODIMENTS

It should be noted that embodiments in the present disclosure or features in the embodiments may be combined with one another without conflict.

It should be understood that in the description of the present disclosure, terms such as "central", "longitudinal", "transverse" "upper", "lower", "front", "rear", "left", "right" "vertical", "horizontal", "top", "bottom", "inside" and "outside" indicate the orientation or position relationships based on the drawings. They are merely intended to facilitate and simplify the description of the present disclosure, rather than to indicate or imply that the mentioned device or components must have a specific orientation or must be constructed and operated in a specific orientation. Therefore, these terms should not be construed as a limitation to the present disclosure. Moreover, terms such as "first" and "second" are used only for the purpose of description and cannot be understood as indicating or implying relative importance or implicitly indicating the number of technical features denoted. Thus, features defined with "first" and "second" may explicitly or implicitly include one or more of the features. In the description of the present disclosure, unless otherwise specified, "a plurality of" means at least two.

In the description of the present disclosure, it should be noted that, unless otherwise clearly specified, meanings of terms "mount", "connected with", and "connected to" should be understood in a broad sense. For example, the connection may be a fixed connection, a removable connection, or an integral connection; may be a mechanical connection or an electrical connection; may be a direct connection or an indirect connection by using an intermediate medium; or may be intercommunication between two elements. A person of ordinary skill in the art may understand specific meanings of the above terms in the present disclosure based on a specific situation.

The present disclosure will be described in detail below with reference to the accompanying drawings and the embodiments.

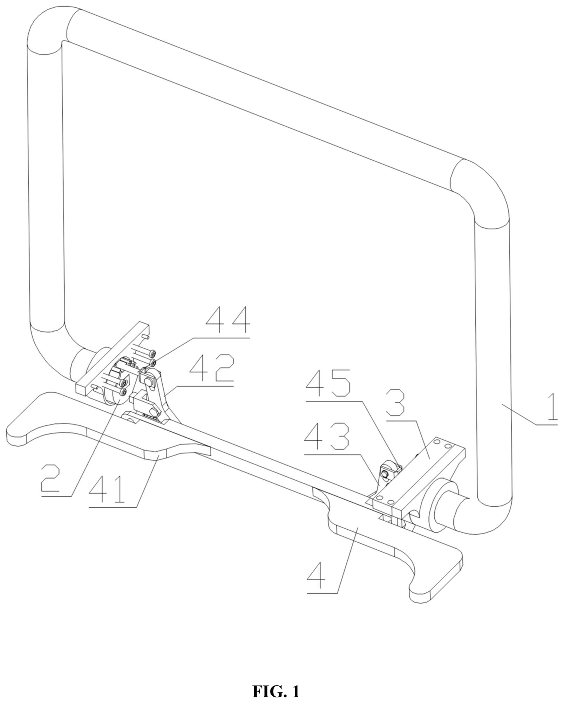

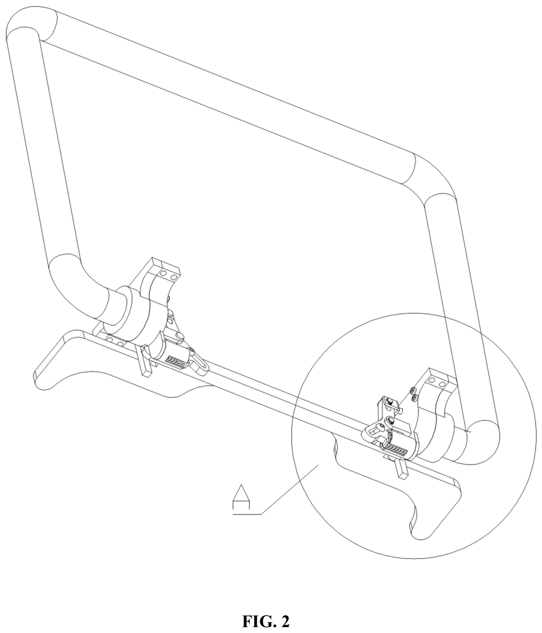

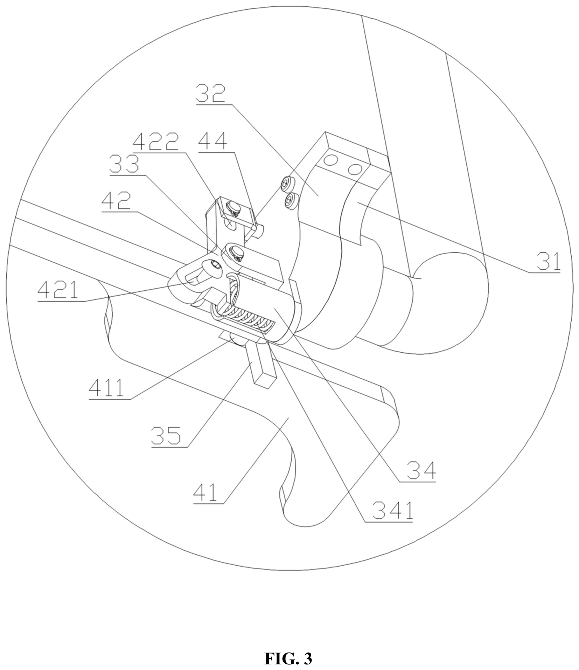

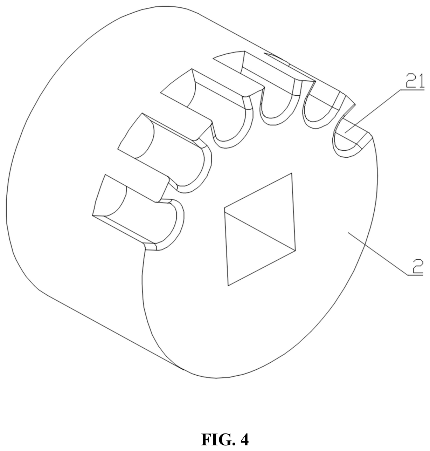

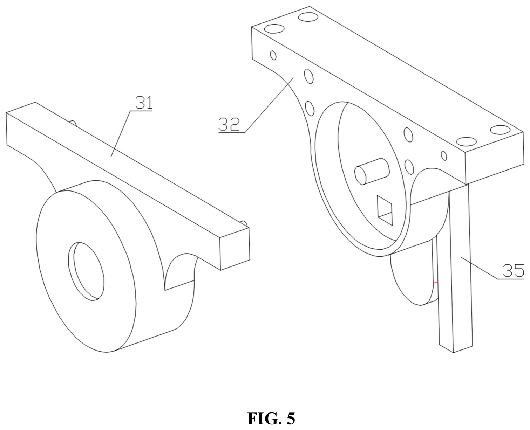

A foot-operated handrail adjusting mechanism, as shown in FIG. 1 to FIG. 5, includes a handrail body 1, adjusting wheels 2, wheel mounting seats 3 and a pedal assembly 4.

The handrail body 1 has a U-shaped structure as a whole. Two ends of the handrail body 1 are each provided with one adjusting wheel 2, and the adjusting wheels 2 each is mounted to a Pilates reformer through a wheel mounting seat 3, so that the handrail body 1 is capable of driving the adjusting wheels 2 to rotate relative to the wheel mounting seats 3.

The adjusting wheel 2 is provided with a plurality of positioning slots 21.

The pedal assembly 4 is hinged between the two wheel mounting seats 3, and pressing a pedal body 41 of the pedal assembly 4 enables two positioning pin bodies of the pedal assembly 4 to be locked with the positioning slots 21 of the two adjusting wheels 2, thereby locking the handrail body 1. Without operation with hands, the user can unlock and lock the handrail body with feet, thereby ensuring the consistency and efficiency of training and solving the problem that conventional methods need to interrupt training and involve cumbersome operations.

Preferably, a middle of the adjusting wheel 2 is provided with a square hole for connecting to the handrail body 1.

A side of the adjusting wheel 2 away from the handrail body 1 is provided with the plurality of positioning slots 21, and the positioning slots 21 are provided in an upper part of the adjusting wheel 2, where the positioning slots 21 are provided within a range of 0°-180°. The design of the square holes ensures synchronized rotation between the handrail and the adjusting wheels, thereby avoiding slippage. The positioning slots 21 provided in the upper part of the circumference precisely cover the most frequently used angle range in ergonomics, so that the product is more compact and reliable. In contrast, if the positioning slots are provided around the whole circumference of the adjusting wheel, the structural strength will be reduced.

Preferably, the wheel mounting seat 3 includes a first mounting shell 31 and a second mounting shell 32. The first mounting shell 31 and the second mounting shell 32 are connected through bolts to mount the adjusting wheel 2.

An inner side of the second mounting shell 32 is provided with a rotating shaft. An end portion of the handrail body 1 is provided with a rotating hole. The square end portion of the handrail body 1 passes through the square hole of the adjusting wheel 2, and the rotating shaft is inserted into the rotating hole.

An outer side of the second mounting shell 32 is provided with a through hole, a hinge seat 33 and a spring mounting seat 34 from top to bottom. The through hole is configured for the positioning pin body to pass through.

The hinge seat 33 is configured to mount the pedal assembly 4. The spring mounting seat 34 is configured to mount a spring body 341.

Preferably, the second mounting shell 32 is further provided with a limit rod 35, and a guide slideway is formed between the limit rod 35 and the second mounting shell 32. The slideways provide precise guidance for the movement of the pedal body 41 along a straight line and prevent the pedal body from deflection, unsmooth movement or derailment during use, thereby ensuring the smoothness of pressing the pedal body and improving the user experience and reliability.

Preferably, the pedal assembly 4 includes the pedal body 41, a first hinge arm 42, a second hinge arm 43, a first positioning pin 44 and a second positioning pin 45. The first hinge arm 42 and the second hinge arm 43 are structurally identical and symmetrically arranged, and the first positioning pin 44 and the second positioning pin 45 are structurally identical and symmetrically arranged. This symmetrical arrangement ensures synchronization and balanced force distribution on two sides of the mechanism. A single press on the pedal assembly can move the two positioning pins at the same time, thereby ensuring the two ends of the handrail to be locked or unlocked at the same time and avoiding instability or damage in case of single-side locking.

A first end of the pedal body 41 is hinged with the hinge seat 33 of one of the wheel mounting seats 3 through the first hinge arm 42. An end portion of the first hinge arm 42 is provided with the first positioning pin 44.

A second end of the pedal body 41 is hinged with the hinge seat 33 of the other wheel mounting seat 3 through the second hinge arm 43. An end portion of the second hinge arm 43 is provided with the second positioning pin 45.

Preferably, the first hinge arm 42 is boomerang-shaped and is provided with a first oblong hole 421 and a second oblong hole 422.

The pedal body 41 is connected to the first oblong hole 421 through a bolt, and the first positioning pin 44 is connected to the second oblong hole 422 through a bolt. A middle of the first hinge arm 42 is hinged with the hinge seat 33 through a bolt.

A side of the first hinge arm 42 close to the first oblong hole 421 is provided with a boss, and the boss is configured to be fitted with the spring body 341. The boss provides a definite point of force application for the spring, thereby ensuring consistent and reliable restoration of the spring.

Two sides of the pedal body 41 are each further provided with a limit roller 411. The two limit rollers 411 are respectively fitted with the two limit rods 35, and the pedal body 41 is fitted with the guide slideway such that the pedal body 41 is guided to move along a straight line.

Preferably, the spring mounting seat 34 is cylindrical in shape. The spring body 341 is mounted in the spring mounting seat 34. Two side walls of the spring mounting seat 34 are each provided with a groove. The two grooves form sliding slots for limiting movement of the first hinge arm 42.

The first positioning pin 44 includes the positioning pin body and a connecting piece. The positioning pin body is mounted to the connecting piece. The connecting piece has a U-shaped structure and is hinged with the second oblong hole 422 through a bolt.

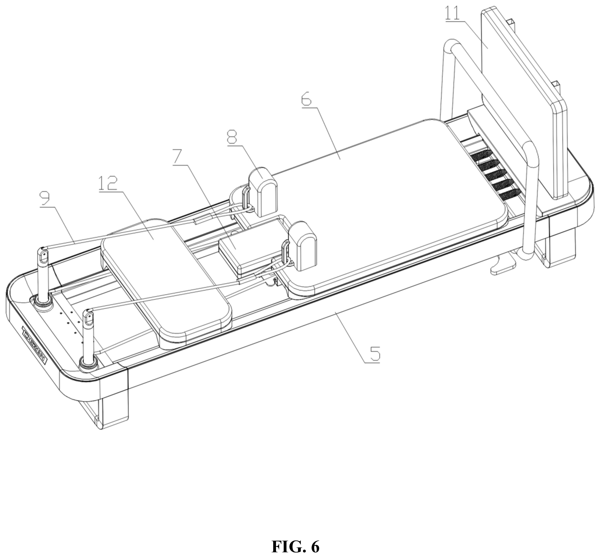

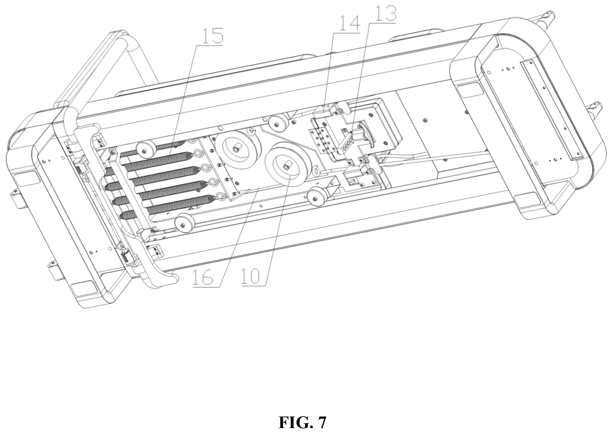

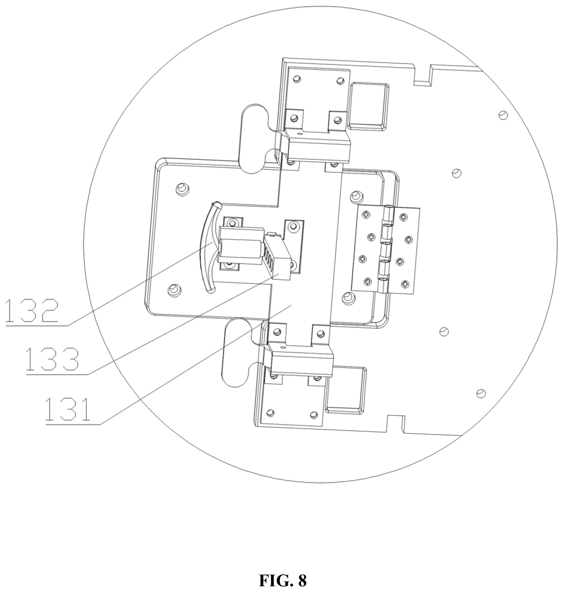

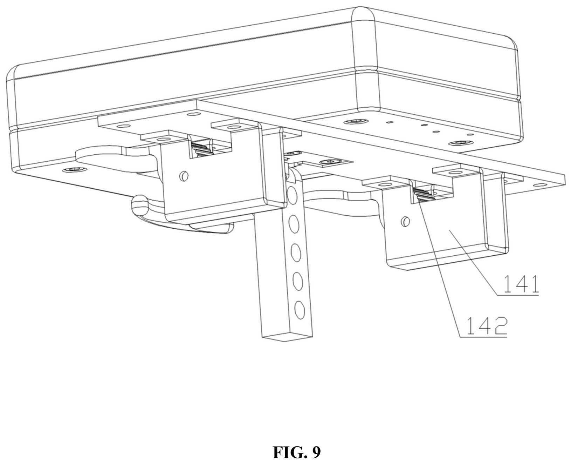

A Pilates reformer, as shown in FIG. 6 to FIG. 9, further includes a frame 5, a carriage 6, a headrest body 7, shoulder rest bodies 8, hand and foot straps 9, winding rollers 10, a first cushion 11 and a second cushion 12. A sliding plate 16, tension springs 15 and hand and foot straps 9 ensure the core functionality of Pilates training, and the foot-operated mechanism, as a highlight of human-machine interaction, significantly improves the quality and user experience of the Pilates reformer.

The foot-operated handrail adjusting mechanism is mounted on an end side of the frame 5.

A bottom surface of the carriage 6 is provided with the sliding plate 16. The sliding plate 16 is provided with a plurality of sliding rollers that form a sliding fit with the frame 5. The sliding plate 16 is connected to the frame 5 through the plurality of tension springs 15.

A bottom surface of the sliding plate 16 is provided with the winding rollers 10. An end of an upper surface of the carriage 6 away from the foot-operated handrail adjusting mechanism is provided with the headrest body 7 and the shoulder rest bodies 8. One end of the hand and foot strap 9 is connected to the winding roller 10, and the other end passes over a support rod arranged on the frame 5 and is connected to a storage rod of a shoulder rest.

The first cushion 11 and the second cushion 12 are respectively arranged at two ends of the frame 5.

Preferably, a lower surface of the carriage 6 is provided with a headrest adjusting assembly 13 including a headrest support plate 131, a headrest fixing pin 132 and a headrest adjusting rod 133.

The carriage 6 is provided with a recess. The headrest support plate 131 is mounted to the recess on the lower surface of the carriage 6, and the headrest body 7 is mounted to the recess through a hinge.

A lower surface of the headrest body 7 is hinged with the headrest adjusting rod 133. The headrest support plate 131 is provided with a through hole for the headrest adjusting rod 133 to pass through. A side of the through hole of the headrest support plate 131 is provided with the headrest fixing pin 132.

The headrest adjusting rod 133 is provided with a plurality of adjusting holes, and inserting the headrest fixing pin 132 into the adjusting holes allows for height adjustment of the headrest body 7.

Preferably, the headrest support plate 131 is further provided with two pressing assemblies 14 for fixing the hand and foot straps 9.

The pressing assembly 14 includes a pressing seat 141 and a pressing wheel 142. The pressing seat 141 is mounted to the headrest support plate 131 for the hand and foot strap to pass through. The pressing wheel 142 is rotatably connected to the pressing seat 141. The pressing wheel 142 is a cam structure. A circumferential surface of the pressing wheel 142 is provided with tooth grooves. The pressing wheel 142 is provided with a lever, and turning the lever enables the hand and foot strap 9 to be fixed between the tooth groove and the pressing seat 141, thereby fixing the hand and foot strap. With the cam structure, as long as the user gently turns the lever, a great pressing force can be generated, thereby preventing the strap from slippage and ensuring safety of training. This operation is much faster than the conventional strap fixing method by tying.

Working principle: To adjust the angle of the handrail, the user needs to press down the pedal assembly 4 with feet. Upon being pressed down, the pedal assembly 4 pulls the two positioning pins out of the positioning slots 21 of the adjusting wheels 2 due to the linkage of the hinge arms. At this time, the handrail body 1 is unlocked.

While keeping the feet on the pedal, the user directly rotates with hands the U-shaped handrail body 1 to a comfortable angle or an angle required by training. Since the adjusting wheels 2 are connected to the handrail through the square holes, rotating the handrail directly drives the two adjusting wheels 2 to rotate synchronously.

After the handrail is rotated to the target position, the user moves the feet from the pedal. Under the action of the restoring force of the springs inside, the pedal assembly 4 automatically returns to its original position, driving the two positioning pins to snap precisely into the currently corresponding positioning slots 21. At this time, the user can continue with training,

Headrest height adjustment: The user may flip the headrest upward, select a desired height by pulling or pushing the headrest adjusting rod 133 and fix the headrest by inserting the headrest fixing pin 132 into the corresponding adjusting hole.

Fixation of hand and foot strap 9: The user may pass the hand and foot strap 9 through the pressing assembly 14 and press down the lever on the pressing wheel 142, such that the strap is clamped firmly between the tooth groove and the pressing seat 141 by the pressing wheel 142 having a cam structure, and thus the hand and foot strap is fixed firmly.

When the user uses the Pilates reformer, the hands do no need to leave the handrail throughout the adjustment process, thereby ensuring continuous training and safety. The unlocking/locking is completed by foot operation, so that the training is not interrupted by adjustment, thereby significantly improving the operation efficiency.

## Claims

1. A foot-operated handrail adjusting mechanism, comprising a handrail body, adjusting wheels, wheel mounting seats and a pedal assembly; wherein
the handrail body has a U-shaped structure as a whole, two ends of the handrail body are each provided with one adjusting wheel, and the adjusting wheels each is mounted to a Pilates reformer through one wheel mounting seat, so that the handrail body is capable of driving the adjusting wheels to rotate relative to the wheel mounting seats;
the adjusting wheels each is provided with a plurality of positioning slots; and
the pedal assembly is hinged between the two wheel mounting seats, and the pedal assembly comprises a pedal body configured to be pedaled to enable two positioning pin bodies of the pedal assembly to be locked with the positioning slots of the two adjusting wheels, thereby locking the handrail body.

2. The foot-operated handrail adjusting mechanism according to claim 1, wherein a middle of the adjusting wheel is provided with a square hole for connecting to the handrail body; and
a side of the adjusting wheel away from the handrail body is provided with the plurality of positioning slots, and the positioning slots are provided in an upper part of the adjusting wheel, wherein the positioning slots are provided within a range of 0°-180°.

3. The foot-operated handrail adjusting mechanism according to claim 2, wherein the wheel mounting seats each comprises a first mounting shell and a second mounting shell, and the first mounting shell and the second mounting shell are connected through bolts to mount the adjusting wheel;
an inner side of the second mounting shell is provided with a rotating shaft, an end portion of the handrail body is provided with a rotating hole, the end portion of the handrail body passes through the square hole of the adjusting wheel, and the rotating shaft is inserted into the rotating hole;
an outer side of the second mounting shell is provided with a through hole, a hinge seat and a spring mounting seat from top to bottom; the through hole is configured for the positioning pin body to pass through; and
the hinge seat is configured to mount the pedal assembly; and the spring mounting seat is configured to mount a spring body.

4. The foot-operated handrail adjusting mechanism according to claim 3, wherein the second mounting shell is further provided with a limit rod, and a guide slideway is formed between the limit rod and the second mounting shell.

5. The foot-operated handrail adjusting mechanism according to claim 4, wherein the pedal assembly comprises the pedal body, a first hinge arm, a second hinge arm, a first positioning pin and a second positioning pin; the first hinge arm and the second hinge arm are structurally identical and symmetrically arranged, and the first positioning pin and the second positioning pin are structurally identical and symmetrically arranged;
a first end of the pedal body is hinged with the hinge seat of one of the wheel mounting seats through the first hinge arm; an end portion of the first hinge arm is provided with the first positioning pin;
a second end of the pedal body is hinged with the hinge seat of the other wheel mounting seat through the second hinge arm; and an end portion of the second hinge arm is provided with the second positioning pin.

6. The foot-operated handrail adjusting mechanism according to claim 5, wherein the first hinge arm is boomerang-shaped and is provided with a first oblong hole and a second oblong hole;
the pedal body is connected to the first oblong hole through a bolt, and the first positioning pin is connected to the second oblong hole through a bolt; a middle of the first hinge arm is hinged with the hinge seat through a bolt;
a side of the first hinge arm close to the first oblong hole is provided with a boss, and the boss is configured to be fitted with the spring body; and
two sides of the pedal body are each further provided with a limit roller, the two limit rollers are respectively fitted with the two limit rods, and the pedal body is fitted with the guide slideway such that the pedal body is guided to move along a straight line.

7. The foot-operated handrail adjusting mechanism according to claim 6, wherein the spring mounting seat is cylindrical in shape, the spring body is mounted in the spring mounting seat, two side walls of the spring mounting seat are each provided with a groove, and the two grooves form sliding slots for limiting movement of the first hinge arm; and
the first positioning pin comprises the positioning pin body and a connecting piece, the positioning pin body is mounted to the connecting piece, and the connecting piece has a U-shaped structure and is hinged with the second oblong hole through a bolt.

8. A Pilates reformer, comprising the foot-operated handrail adjusting mechanism according to any one of claims 1 to 7, a frame, a carriage, a headrest body, shoulder rest bodies, hand and foot straps, winding rollers, a first cushion and a second cushion; wherein
the foot-operated handrail adjusting mechanism is mounted on an end side of the frame;
a bottom surface of the carriage is provided with a sliding plate, and the sliding plate is provided with a plurality of sliding rollers that form a sliding fit with the frame; the sliding plate is connected to the frame through a plurality of tension springs;
a bottom surface of the sliding plate is provided with the winding rollers, an end of an upper surface of the carriage away from the foot-operated handrail adjusting mechanism is provided with the headrest body and the shoulder rest bodies, one end of the hand and foot strap is connected to the winding roller, and the other end passes over a support rod arranged on the frame and is connected to a storage rod of a shoulder rest; and
the first cushion and the second cushion are respectively arranged at two ends of the frame.

9. The Pilates reformer according to claim 8, wherein a lower surface of the carriage is provided with a headrest adjusting assembly comprising a headrest support plate, a headrest fixing pin and a headrest adjusting rod;
the carriage is provided with a recess, the headrest support plate is mounted to the recess on the lower surface of the carriage, and the headrest body is mounted to the recess through a hinge;
a lower surface of the headrest body is hinged with the headrest adjusting rod, the headrest support plate is provided with a through hole for the headrest adjusting rod to pass through, and a side of the through hole of the headrest support plate is provided with the headrest fixing pin; and
the headrest adjusting rod is provided with a plurality of adjusting holes, and inserting the headrest fixing pin into the adjusting holes allows for height adjustment of the headrest body.

10. The Pilates reformer according to claim 9, wherein the headrest support plate is further provided with two pressing assemblies for fixing the hand and foot straps; and
the two pressing assemblies each comprise a pressing seat and a pressing wheel, and the pressing seat is mounted to the headrest support plate for the hand and foot strap to pass through; and the pressing wheel is rotatably connected to the pressing seat, the pressing wheel is a cam structure, a circumferential surface of the pressing wheel is provided with tooth grooves, the pressing wheel is provided with a lever, and turning the lever enables the hand and foot strap to be fixed between the tooth groove and the pressing seat, thereby fixing the hand and foot strap.
